# EUROPÄISCHE PATENTSCHRIFT

(11) **EP 1 955 907 B1**
(45) Veröffentlichungstag und Bekanntmachung des Hinweises auf die Patenterteilung: **11.11.2009**
(21) Anmeldenummer: 07118807.2
(22) Anmeldetag: 18.10.2007
(51) Int. Cl.: B60R 21/13

(54) **Überrollschutzsystem mit Überrollbügel für Kraftfahrzeuge**
System for roll-over protection with roll bar for motor vehicles
Système de protection avec arceau de sécurité pour des véhicules automobiles

(30) Priorität: 12.02.2007 DE 102007006768; 23.03.2007 DE 102007013954
(43) Veröffentlichungstag der Anmeldung: 13.08.2008
(73) Patentinhaber: ISE Automotive GmbH, 51702 Bergneustadt (DE)
(72) Erfinder: Nowack, Reinhard, 57489, Drolshagen (DE); Nass, Michael, 51702, Bergneustadt (DE); Latussek, Holger, 51702, Bergneustadt (DE)
(74) Vertreter: Fuchs

(56) Entgegenhaltungen:
- EP-A- 0 788 932
- EP-A- 1 547 874
- WO-A-2005/080142
- DE-A1- 4 302 152

## Beschreibung

Die vorliegende Erfindung betrifft ein Überrollschutzsystem für Kraftfahrzeuge gemäß Anspruch 1.

Derartige Überrollschutzsysteme dienen zum Schutz der Insassen in Kraftfahrzeugen ohne schützendes Dach, typischerweise in Cabriolets oder Roadstern, bei einem Überschlag, damit das Fahrzeug über den aufgestellten Überrollkörper abrollt, der den Insassen einen Überlebensraum bietet.

Es ist dabei bekannt, einen die gesamte Fahrzeugbreite überspannenden, als Teil der Karosserie ausgebildeten Überrollbügel vorzusehen. Bei dieser Lösung wird der erhöhte Luftwiderstand und das Auftreten von Fahrgeräuschen als nachteilig empfunden, abgesehen von der Beeinträchtigung der Fahrzeugästhetik.

Es ist auch bekannt, jedem Fahrzeugsitz einen höhenunveränderlich fest im Fahrgastraum installierten, d.h. starren, U-förmigen Überrollbügel zuzuordnen. Diese Lösung wird typischerweise bei Roadstern zur Unterstreichung des sportlichen Aussehens eingesetzt.

Weit verbreitet bei Cabriolets sind konstruktive Lösungen, bei denen der Überrollkörper im Normalzustand eingefahren ist, und im Gefahrenfall, also bei einem drohenden Überschlag, sehr schnell in eine schützende Position aufgestellt wird, um zu verhindern, dass die Fahrzeuginsassen durch das sich überschlagende Fahrzeug erdrückt werden.

Diese sogenannten "aktiven" Überrollschutzsysteme weisen typischerweise einen in einem fahrzeugfesten Führungskörper geführten U-förmigen Überrollbügel oder aus einem Profilkörper gebildeten Überrollkörper auf, wobei der Führungskörper in einem Kassetten-Gehäuse, das Seitenteile und ein Bodenteil aufweist, befestigt ist. Dieser Überrollbügel bzw. Überrollkörper wird im Normalzustand gegen die Vorspannkraft mindestens einer Antriebs-Druckfeder durch eine Haltevorrichtung in einer unteren Ruhelage gehalten, und ist im Überschlagfall, sensorgesteuert unter Lösen der Haltevorrichtung, durch die Federkraft der Antriebs-Druckfeder in eine obere, schützende Stellung bringbar, wobei eine dann in verzahnenden Wirkeingriff tretende Verriegelungseinrichtung (Wiedereinfahrsperre) ein Zurückdrücken des Überrollbügels verhindert. Dabei ist typischerweise jedem Fahrzeugsitz eine Kassette zugeordnet. Eine derartige Kassetten-Konstruktion eines aktiven Überrollschutzsystems mit einem U-förmigen Überrollbügel zeigt beispielsweise die DE 100 40 649 C1.

Neben den Kassetten-Konstruktionen sind auch aktive Überrollschutzsysteme nach einem Konstruktionsprinzip mit einer Rückwand-Baueinheit bekannt, wie es beispielsweise in der DE 103 44 446 B3 beschrieben wird. Dieses Prinzip weist eine zwischen Fond und Gepäckraum angebrachte Rahmenkonstruktion auf, bestehend einmal aus einem sich über die Innenbreite des Fahrzeuges erstreckenden, karosseriefest angebrachten Profil-Querträger, der Führungsmittel für zwei nebeneinander angeordnete U-förmige Überrollbügel aufweist, sowie zum anderen aus sich vertikal nach unten erstreckenden Profil-Trägerelementen mit einem Bodenteil für die Aufnahme der üblichen Komponenten des ausfahrbaren Überrollschutzsystems, wie z.B. den Auslösemagneten für das sensorgesteuerte Auslösen der Ausfahrbewegung der Überrollbügel sowie die Antriebs-Druckfedern.

Sowohl die Kassetten-Konstruktionen als auch die Querträger-Konstruktionen sind in vielfältigen Ausführungsformen, angepasst an den jeweiligen Fahrzeugtyp, auf dem Markt eingeführt und in Betrieb.

Wie schon erwähnt, ist das Bereitstellen eines Überlebensraumes bei einem Überschlag die Hauptaufgabe eines Überrollschutzsystems. Die entscheidende Kenngröße bei einem System mit Überrollbügel für diesen Überlebensraum ist die so genannte Überrollbügeltangente. Hierbei handelt es sich um die Verbindungslinie zwischen der sicherheitsrelevanten A-Säule eines Kraftfahrzeuges und dem höchsten Punkt des aufgestellten Überrollbügels. Diese Überrolltangente spannt gewissermaßen den Überlebensraum auf.

Bei den heute üblicherweise mit derartigen Überrollschutzsystemen ausgestatteten Fahrzeugen handelt es sich meist um Cabriolets. Ein spezielles Problem bei dieser Fahrzeuggruppe ist der relativ kleine Stauraum insbesondere bei abgelegtem Dach. Daher setzen sich am Markt immer häufiger Fahrzeuge durch, die zumindest eine Durchlademöglichkeit bieten. Hiermit einhergehend ist allerdings der Nachteil, dass - um eine möglichst große Durchladeöffnung zur Verfügung zu stellen - der Bauraum für ein Überrollschutzsystem relativ klein ist, wodurch oftmals nur passive Überrollschutzsysteme zum Einsatz kommen. Bisherige aktive Überrollschutzsysteme weisen dem gegenüber aufgrund des geringen Bauraums einen nur relativ kleinen Hub auf, wodurch nur eine relativ niedrige Überrollbügeltangente erzielbar ist. Dies soll anhand der Zeichnungsfigur 1 kurz erläutert werden.

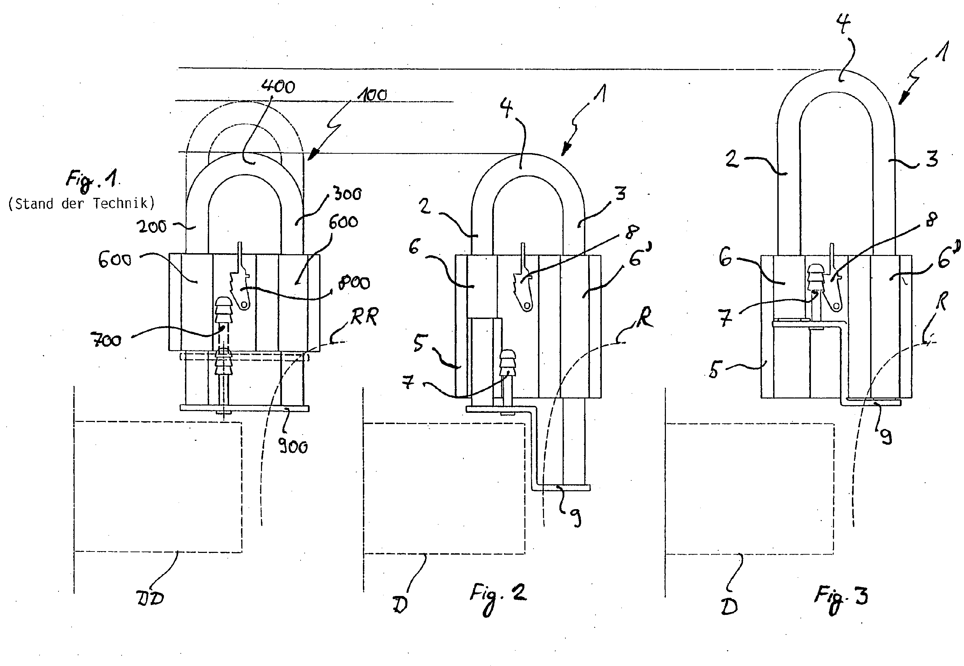

Die Figur 1 zeigt ein aktives Überrollschutzsystem mit einem U-förmigen Überrollbügel 100 mit einem Bügelkopf 400 sowie mit zwei parallelen Bügelschenkeln 200, 300. Diese Bügelschenkel 200, 300 sind klassischerweise in zwei fahrzeugfesten Bügelrohrführungen 600 geführt. Am unteren Ende sind beide Bügelschenkel 200, 300 durch eine Quertraverse 900 miteinander verbunden. Angedeutet ist noch eine Verriegelungseinrichtung 700, 800, bestehend aus einem Rastdorn 700 und einer Sperrklinke 800.

Vorliegend interessant ist nun die relative Position dieses Überrollschutzsystems im Verhältnis zu einem angedeuteten Radkasten RR und der Durchlademöglichkeit DD. Die Raumverhältnisse sind in einem Fahrzeug, für welches ein derartiges Überrollschutzsystem vorgesehen ist, relativ beengt. Mit durchgezogenen Linien ist der Überrollbügel 100 in seiner Ruhelage dargestellt, in der strichpunktierten Darstellung in der aufgestellten Position. Wie man sieht ist der Hub, welchen der Überrollbügel 100 ausführen kann, relativ klein. Die Überrollbügeltangente nimmt daher einen relativ steilen Verlauf und der Überlebensraum für die Fahrzeuginsassen ist relativ beengt.

Die WO 2005/080142 A offenbart eine alternative Problemlösung zur Vergrößerung der Durchlademöglichkeit. Dabei wird ein als Kassetten-Konstruktion ausgeführtes Überrollschutzsystem durch fahrzeugfeste Querstreben insgesamt angehoben.

Die EP-A-1 547 874 offenbart einen feststehenden Überrollbügel dessen dem Fahrzeuginneren zugewandter Bügelschenkel gegenüber dem äußeren Bügelschenkel verkürzt ist.

Die DE 43 02 152 A1 offenbart einen ausfahrbaren Überrollbügel, der zwischen den Bügelschenkeln durch eine stufenförmig ausgebildete Quertraverse verstärkt ist, wobei die Stufe zur Bereitstellung von Bauraum für eine Systemkomponente vorgesehen ist.

Vor diesem Hintergrund ist es nun die Aufgabe der vorliegenden Erfindung ein aktives Überrollschutzsystem vorzuschlagen, welches auch bei beengten Raumverhältnissen einen hinreichenden Hub bei nur geringer Bauhöhe aufweist, bzw. ein Überrollschutzsystem zur Verfügung zu stellen, welches deutlich geringere Baumaße aufweist als herkömmliche Systeme.

Gelöst wird diese Aufgabe durch ein Überrollschutzsystem mit den Merkmalen des Anspruchs 1. Vorteilhafte Weiterbildungen ergeben sich aus den Unteransprüchen.

Demgemäß wird vorgeschlagen, dass die Bügelrohrführungen unterschiedlich lang ausgebildet sind und die Bügelschenkel entsprechend den Bügelrohrführungen unterschiedliche Längen aufweisen, wobei die fahrzeugfesten Bügelrohrführungen Bestandteile eines gemeinsamen fahrzeugfesten Teils sind und an diesem fahrzeugfesten Teil so angeordnet sind, dass die kürzere Bügelrohrführung für den kürzeren Bügelschenkel auf der dem Bügelkopf abgewandten Seite im Verhältnis zu der längeren Bügelrohrführung für den längeren Bügelschenkel zum Bügelkopf hin versetzt ist, und der kürzere Bügelschenkel in der Ruhelage nur geringfügig über die Konturen des fahrzeugfesten Teils hinausragt.

Grundsätzlich ist davon auszugehen, dass Zulieferer der Kfz-Industrie von dieser Raumbaudaten erhält, in denen ein verfügbarer Platz für ein Überrollschutzsystem dargestellt ist. Regelmäßig steht auf der Fahrzeuginnenseite sehr wenig Bauraum zur Verfügung. Dies liegt unter anderem daran, dass der Platz unter dem innenliegenden Überrollschenkel benötigt wird, um Stauraum für Gepäck oder dergleichen zu schaffen. Es können aber auch andere Fahrzeugbauteile wie beispielsweise der Tank darunter liegen.

Regelmäßig erfährt der fahrzeugseitig außenliegende Bügelschenkel in einer Überschlagssituation Zugkräfte, die durch die längere Führung durch die längere Bügelrohrführung aufgenommen werden können, wohingegen der fahrzeugseitig innenliegende, kürzere Bügelschenkel regelmäßig Druckkräfte erfährt. Diese Druckkräfte können im vorliegenden Fall nur durch die kürzere Bügelrohrführung innen aufgefangen werden. Das Zusammenspiel der längeren äußeren Bügelrohrführung mit der kürzeren innenliegenden Bügelrohrführung ergibt aber ein Gesamtbelastungsbild, welches ein akzeptables Gesamtbelastungsbild ergibt. Mit anderen Wort wird die etwas schwächere Kraftaufnahmemöglichkeit der innenliegenden Führung des Überrollbügels kompensiert durch die höhere Kraftaufnahmemöglichkeit der äußeren längeren Führung des außenliegenden Bügelschenkels.

Der große Vorteil liegt bei allen Ausführungsformen darin, dass zusätzlicher Bauraum eingespart wird gegenüber herkömmlichen aktiven Systemen bzw. Raum für Durchlademöglichkeiten etc. geschaffen wird und dass ein größerer Hub des Überrollbügels realisierbar ist.

Als weiterer Vorteil wird angegeben, dass die Auslöseeinheit des Systems unterhalb des kürzeren Bügelschenkels angeordnet werden kann. Gleichzeitig kann unterhalb des kürzeren Bügelschenkels die Durchlademöglichkeit verlaufen, so dass sich unterhalb des kürzeren Bügelschenkels eine Klappe in der Durchlademöglichkeit befinden kann, die es ermöglicht, leicht an die Auslöseeinheit im Servicefall heranzukommen, beispielsweise nach einer Fehlauslösung oder dergleichen. Gemäß einer vorteilhaften Weiterbildung ist also die Auslöseeinheit für den Antrieb unterhalb der kürzeren Bügelrohrführung positionierbar.

Vorteilhafterweise sind die Enden beider Bügelschenkel über eine stufenförmig ausgebildete Quertraverse miteinander verbunden, mit der dann zumindest Teile der Verriegelungseinrichtung verbunden sind. So wird für Stabilität der Bügelschenkel auch in diesem Bereich gesorgt. Nebenbei erwähnt kann die Verriegelungseinrichtung auch in dem erfindungsgemäßen Fall deutlich kleiner und somit auch kostengünstiger gestaltet werden als bei herkömmlichen Systemen. Dies führt zu einer zusätzlichen Kostenersparnis.

Vorteilhafterweise ist als Antrieb zum Aufstellen des Überrollbügels ein Federantrieb mit nur einer Schraubenfeder im kürzeren Bügelschenkel vorgesehen. Auch dies dient zu weiteren Kosteneinsparungen gegenüber herkömmlichen Systemen, obwohl der mögliche Hub des Überrollbügels gegenüber den bekannten Systemen, wie anhand von Figur 1 erläutert, wesentlich größer ist.

Der fahrzeugfeste Teil des Überrollschutzsystems mit den Bügelrohrführungen kann durch eine an sich bekannte Profilkassette gebildet sein. Kostengünstiger ist eine Ausbildung, bei der das fahrzeugfeste Teil als C-Profilteil ausgebildet ist.

Die Erfindung wird anhand eines Ausführungsbeispiels gemäß nachfolgend beschriebener Zeichnungsfiguren näher erläutert. Hierbei zeigt:
- Fig. 2: schematisch ein Überrollschutzsystem mit einem Überrollbügel in der Ruhelage in der relativen Position zu einer Durchlade und einem Radkasten des Fahrzeugs, und
- Fig. 3: das System aus Figur 2 im aufgestellten Zustand.

Nachfolgend sind gleiche Teile mit den selben Bezugszeichen versehen.

Das Überrollschutzsystem gemäß der Figuren 2 und 3 weist einen U-förmigen Überrollbügel 1 auf, der aus einem Bügelkopf 4 mit zwei parallel verlaufenden Bügelschenkeln 2, 3 besteht. Die Bügelschenkel 2, 3 sind in einem fahrzeugfesten Teil 5 geführt, welche mit Bügelrohrführungen 6, 6' ausgestattet ist. Die Besonderheit besteht nun darin, dass in dem dargestellten Ausführungsbeispiel die dem Fahrzeuginneren zuzuwendende Bügelrohrführung 6 kürzer ausgebildet ist als die Bügelrohrführung 6', die dem Fahrzeuginneren abzuwenden ist. Entsprechend kürzer ausgebildet ist der Bügelschenkel 2 gegenüber dem Bügelschenkel 3 des Überrollbügels 1, und zwar so, dass der Bügelschenkel 2 im Ruhezustand praktisch nicht oder nur geringfügig nach unten über die Konturen des fahrzeugfesten Teils 5 hinausragt. Durch diese Maßnahme wird einerseits entweder der Bauraum so modifiziert, dass eine größere Durchlademöglichkeit, angedeutet durch D, entsteht oder aber bei vergleichbarer Baugröße wie herkömmliche Systeme ein größerer Hub des Überrollbügels 1 erzielbar ist. Dies wird anhand der Figur 3 weiter unten näher erläutert.

Die beiden Enden der Bügelschenkel 2, 3 sind miteinander durch eine stufenförmig ausgebildete Quertraverse 9 verbunden. An dieser Quertraverse 9 ist ein Teil der Verriegelungseinrichtung, nämlich der Rastdorn 7, angebracht, der die Hubbewegung beim Aufstellen des Überrollbügels 1 mitausführt. Gegenstück ist die fahrzeugfest angeordnete Rastklinke 8. Die Verriegelungseinrichtung ist per se bekannt und braucht daher an dieser Stelle nicht weiter erläutert werden.

Nicht unerwähnt bleiben soll, dass als Antrieb zum Aufstellen des Überrollbügels 1 ein Federantrieb mit nur einer Schraubenfeder (nicht dargestellt) im kürzeren Bügelschenkel 6 vorgesehen sein kann.

Schematisch dargestellt ist - wie schon in Figur 1 - der Radkasten R.

In Figur 3 ist nun der aufgestellte Überrollbügel 1 dargestellt. Was gegenüber der Figur 1 deutlich zum Ausdruck kommt, ist der deutlich größere Hub gegenüber dem Überrollbügel 100 gemäß dem Stand der Technik bei ansonsten unveränderter Positionierung einer Durchlade D bzw. DD und des Radkastens R bzw. RR. Dies wird durch die angedeuteten Tangenten an den Bügelköpfen 4, 400 deutlich.

Wie aus den Figuren 2 und 3 zum Ausdruck kommt, ist die Kraftaufnahmemöglichkeit von Druckkräften, die im Belastungsfall den zum Fahrzeuginneren hin liegenden Bügelschenkel 2 zurückzudrücken versuchen, deutlich kleiner als die Kraftaufnahmemöglichkeit der Bügelrohrführung 6' für den äußeren Bügelschenkel 3, der im Belastungsfall typischerweise Zugkräften ausgesetzt ist. Die Schwächung der Kraftaufnahmemöglichkeit der linken Bügelrohrführung 6 wird kompensiert durch die stärkere Kraftaufnahmemöglichkeit der rechten Bügelrohrführung 6', so dass sich insgesamt eine stabile Kraftaufnahme einstellt.

## Patentansprüche

1. Überrollschutzsystem für Kraftfahrzeuge mit einem U-förmigen Überrollbügel (1), bestehend aus einem Bügelkopf (4) mit zwei parallelen, in zwei fahrzeugfesten Bügelrohrführungen (6, 6') geführten Bügelschenkeln (2, 3), mit einem Antrieb zum sensorgesteuerten Aufstellen des Überrollbügels (1) aus einer Ruhelage in eine Schutzposition und einer Verriegelungseinrichtung (7, 8) für den in der Schutzposition aufgestellten Überrollbügel (1), **dadurch gekennzeichnet, dass** die Bügelrohrführungen (6, 6') unterschiedlich lang ausgebildet sind und die Bügelschenkel (2, 3) entsprechend den Bügelrohrführungen (6, 6') unterschiedliche Längen aufweisen, wobei die fahrzeugfesten Bügelrohrführungen (6, 6') Bestandteile eines gemeinsamen fahrzeugfesten Teils (5) sind und an diesem fahrzeugfesten Teil (5) so angeordnet sind, dass die kürzere Bügelrohrführung für den kürzeren Bügelschenkel auf der dem Bügelkopf (4) abgewandten Seite im Verhältnis zu der längeren Bügelrohrführung für den längeren Bügelschenkel zum Bügelkopf (4) hin versetzt ist, und der kürzere Bügelschenkel in der Ruhelage nur geringfügig über die Konturen des fahrzeugfesten Teils (5) hinausragt.

2. Überrollschutzsystem nach Anspruch 1, **dadurch gekennzeichnet, dass** die Enden beider Bügelschenkel (2, 3) über eine stufenförmig ausgebildete Quertraverse miteinander verbunden sind.

3. Überrollschutzsystem nach Anspruch 1 oder Anspruch 2, **dadurch gekennzeichnet, dass** die Auslöseeinheit für den Antrieb unterhalb der kürzeren Bügelrohrführung (6) positionierbar ist.

4. Überrollschutzsystem nach einem der Ansprüche 1 bis 3, **dadurch gekennzeichnet, dass** als Antrieb zum Aufstellen des Überrollbügels (1) ein Federantrieb mit nur einer Schraubenfeder im kürzeren Bügelschenkel (6) vorgesehen ist.

5. Überrollschutzsystem nach einem der Ansprüche 1 bis 4, **dadurch gekennzeichnet, dass** sein fahrzeugfestes Teil (5) durch eine Profilkassette gebildet ist.

6. Überrollschutzsystem nach einem der Ansprüche 1 bis 4, **dadurch gekennzeichnet, dass** sein fahrzeugfestes Teil (5) als C-Profilteil ausgebildet ist.

## Claims

1. Rollover protection system for motor vehicles having a U-shaped rollover bar (1), consisting of a bar head (4) with two parallel bar limbs (2, 3) guided in two bar tube guides (6, 6') which are fixed to the vehicle, with a drive for sensor-controlled raising of the rollover bar (1) from a rest position to a protective position and a locking device (7, 8) for the rollover bar (1) which is raised in the protective position, **characterised in that** the bar tube guides (6, 6') are designed to have different length and the bar limbs (2, 3) have different lengths corresponding to the bar tube guides (6, 6'), wherein the bar tube guides (6, 6') which are fixed to the vehicle are components of a common part (5) which is fixed to the vehicle and are arranged on this part (5) which is fixed to the vehicle so that the shorter bar tube guide for the shorter bar limb is displaced towards the bar head (4) on the side facing away from the bar head (4) relative to the longer bar tube guide for the longer bar limb, and the shorter bar limb in the rest position projects only slightly beyond the contours of the part (5) which is fixed to the vehicle.

2. Rollover protection system according to claim 1, **characterised in that** the ends of both bar limbs (2, 3) are connected to one another via a transverse bar designed to be stepped.

3. Rollover protection system according to claim 1 or claim 2, **characterised in that** the trigger unit for the drive can be positioned below the shorter bar tube guide (6).

4. Rollover protection system according to one of claims I to 3, **characterised in that** a spring drive having only one helical spring in the shorter bar limb (6) is provided as the drive for raising the rollover bar (I).

5. Rollover protection system according to one of claims 1 to 4, **characterised in that** its part (5) which is fixed to the vehicle is formed by a profile cassette.

6. Rollover protection system according to one of claims 1 to 4, **characterised in that** its part (5) which is fixed to the vehicle is designed as a C-profile part.

## Revendications

1. Système de protection pour véhicule automobile comportant un arceau de protection (1) en forme de U, formé par une partie supérieure (4) avec deux branches (2, 3) parallèles, guidées dans deux glissières tubulaires (6, 6') solidaires du véhicule, comportant un système d'entraînement pour le déploiement, commandé par capteur, de l'arceau de protection (1) hors d'une position de repos dans une position de protection et un dispositif de verrouillage (7, 8) pour l'arceau de protection (1) déployé dans la position de protection, **caractérisé en ce que** les glissières tubulaires (6, 6') sont réalisées avec des longueurs différentes et les branches (2, 3) de l'arceau ont des longueurs différentes conformément aux glissières tubulaires (6, 6'), lesdites glissières tubulaires (6, 6') solidaires du véhicule étant des parties intégrantes d'une partie (5) commune solidaire du véhicule et étant disposées sur ladite partie (5) solidaire du véhicule, de telle sorte que la glissière tubulaire la plus courte, destinée à la branche la plus courte de l'arceau, est décalée, sur le côté détourné de la partie supérieure (4) de l'arceau, vers la partie supérieure (4) de l'arceau par rapport à la glissière tubulaire la plus longue de l'arceau, et la branche la plus courte de l'arceau, dans la position de repos, s'avance seulement légèrement au-delà des contours de la partie (5) solidaire du véhicule.

2. Système de protection pour véhicule automobile selon la revendication 1, **caractérisé en ce que** les extrémités des deux branches (2, 3) de l'arceau sont reliées entre elles par une traverse réalisée en forme de gradins.

3. Système de protection pour véhicule automobile selon la revendication 1 ou 2, **caractérisé en ce que** l'unité de déclenchement du système d'entraînement peut être placée au-dessous de la glissière tubulaire (6) la plus courte.

4. Système de protection pour véhicule automobile selon l'une quelconque des revendications 1 à 3, **caractérisé en ce que** pour former le système d'entraînement pour le déploiement de l'arceau de protection (1), il est prévu un système d'entraînement à ressort avec un seul ressort hélicoïdal dans la branche (6) la plus courte de l'arceau.

5. Système de protection pour véhicule automobile selon l'une quelconque des revendications 1 à 4, **caractérisé en ce que** sa partie (5) solidaire du véhicule est formée par un caisson profilé.

6. Système de protection pour véhicule automobile selon l'une quelconque des revendications 1 à 4, **caractérisé en ce que** sa partie (5) solidaire du véhicule est formée par un élément profilé en C.
